# EUROPEAN PATENT SPECIFICATION

(11) **EP 3 926 543 B1**
(45) Date of publication and mention of the grant of the patent: **04.03.2026**
(21) Application number: 20214065.3
(22) Date of filing: 15.12.2020
(51) Int. Cl.: G06N 3/0464, G06N 3/063

(54) **METHOD, ACCELERATOR, AND ELECTRONIC DEVICE WITH TENSOR PROCESSING**
VERFAHREN, BESCHLEUNIGER UND ELEKTRONISCHE VORRICHTUNG MIT TENSORVERARBEITUNG
PROCÉDÉ, ACCÉLÉRATEUR, ET DISPOSITIF ÉLECTRONIQUE AVEC TRAITEMENT TENSEUR

(30) Priority: 18.06.2020 KR 20200074268
(43) Date of publication of application: 22.12.2021
(73) Proprietor: Samsung Electronics Co., Ltd., Suwon-si 16677 (KR)
(72) Inventor: HAN, Songyi, Suwon-si, 16678 Gyeonggi-do (KR); VASYLTSOV, Ihor, Suwon-si, 16678 Gyeonggi-do (KR)
(74) Representative: Grünecker Patent- und Rechtsanwälte PartG mbB

(56) References cited:
- XU HAOBO ET AL: "ACG-Engine: An Inference Accelerator for Content Generative Neural Networks", 2019 IEEE/ACM INTERNATIONAL CONFERENCE ON COMPUTER-AIDED DESIGN (ICCAD), IEEE, 4 November 2019 (2019-11-04), pages 1 - 7, XP033678235
- WONKYUNG JUNG ET AL: "Restructuring Batch Normalization to Accelerate CNN Training", ARXIV.ORG, CORNELL UNIVERSITY LIBRARY, 201 OLIN LIBRARY CORNELL UNIVERSITY ITHACA, NY 14853, 4 July 2018 (2018-07-04), XP081128616

## Description

### BACKGROUND

### 1. Field

The following description relates to method, an accelerator, and an electronic device with tensor processing.

### 2. Description of Related Art

Independent hardware may be dedicated to artificial intelligence (Al) technology. For example, Al may perform inference and learning through predetermined operations. As such, various devices may be exclusive hardware for implementing and executing Al.

The exclusive hardware for AI may be implemented by, for example, a graphics processing unit (GPU), or implemented by a field-programmable gate array (FPGA), and an application-specific integrated circuit (ASIC) of changeable use. In the Al technology, an on-chip memory and an off-chip memory may be used. However, a memory access cost for accessing the off-chip memory is greater than a memory access cost for accessing the internal on-chip memory. Further, operations for performing normalization by a neural network may include an operation for calculating an average and/or variance each time data is transferred between layers of the neural network. For such operations, a typical electronic device may transfer the data to be normalized to a special operator such as a host processor outside an accelerator of the Al, and a result of calculation by the special operator may be received again by the accelerator, and accordingly such data movement of the typical electronic device may increase latency and power consumption. Xu Haobo et al. describe "ACG-Engine: An Inference Accelerator for Content Generative Neural Networks" (ACM International Conference on Computer-Aided Design, IEEE, 2019). According to the authors, the computational process of the normalization operation based on a hardware-aware mathematical transformation is first simplified. By equivalent transformation, the count of operations of the IN (instance normalization) operation can be greatly reduced and the demand for the memory bandwidth can be reduced simultaneously. Therefore, the authors designed a novel dataflow for generative neural network accelerators that considers the data locality between the CONV/DECONV layers and IN layers.

### SUMMARY

The invention is described in the claims. The invention provides a processor-implemented tensor processing method according to claim 1. The invention provides further an accelerator according to claim 12. Preferred embodiments are described in the dependent claims.

The data inference result may be any one of a speech recognition, a machine translation, a machine interpretation, an object recognition, a pattern recognition, and computer vision.

Other features and aspects will be apparent from the following detailed description, the drawings, and the claims.

### BRIEF DESCRIPTION OF THE DRAWINGS

FIG. 1 illustrates an example of an electronic device.
FIGS. 2 and 3 illustrate examples of processing a tensor with respect to a first normalization layer.
FIGS. 4 and 5 illustrate examples of processing a tensor with respect to a second normalization layer.
FIG. 6 illustrates an example of a neural network including a normalization layer.
FIG. 7 illustrates an example of a normalization layer.
FIGS. 8 and 9 illustrate examples of tensor processing methods.
FIGS. 10 and 11 illustrate examples of electronic devices.

Throughout the drawings and the detailed description, unless otherwise described or provided, the same drawing reference numerals will be understood to refer to the same elements, features, and structures. The drawings may not be to scale, and the relative size, proportions, and depiction of elements in the drawings may be exaggerated for clarity, illustration, and convenience.

### DETAILED DESCRIPTION

Although terms of "first" or "second" are used herein to describe various members, components, regions, layers, or sections, these members, components, regions, layers, or sections are not to be limited by these terms. Rather, these terms are only used to distinguish one member, component, region, layer, or section from another member, component, region, layer, or section. Thus, a first member, component, region, layer, or section referred to in examples described herein may also be referred to as a second member, component, region, layer, or section without departing from the teachings of the examples.

Throughout the specification, when an element, such as a layer, region, or substrate, is described as being "on," "connected to," or "coupled to" another element, it may be directly "on," "connected to," or "coupled to" the other element, or there may be one or more other elements intervening therebetween. In contrast, when an element is described as being "directly on," "directly connected to," or "directly coupled to" another element, there can be no other elements intervening therebetween. Likewise, expressions, for example, "between" and "immediately between" and "adjacent to" and "immediately adjacent to" may also be construed as described in the foregoing.

Unless otherwise defined, all terms, including technical and scientific terms, used herein have the same meaning as commonly understood by one of ordinary skill in the art to which this disclosure pertains consistent with and after an understanding of the present disclosure. Terms, such as those defined in commonly used dictionaries, are to be interpreted as having a meaning that is consistent with their meaning in the context of the relevant art and the present disclosure, and are not to be interpreted in an idealized or overly formal sense unless expressly so defined herein.

Hereinafter, examples will be described in detail with reference to the accompanying drawings. The following specific structural or functional descriptions are exemplary to merely describe the examples, and the scope of the examples is not limited to the descriptions provided in the present specification. Various changes and modifications can be made thereto by those of ordinary skill in the art based on an understanding of the disclosure of the present application. Like reference numerals in the drawings denote like elements, and a known function or configuration will be omitted herein.

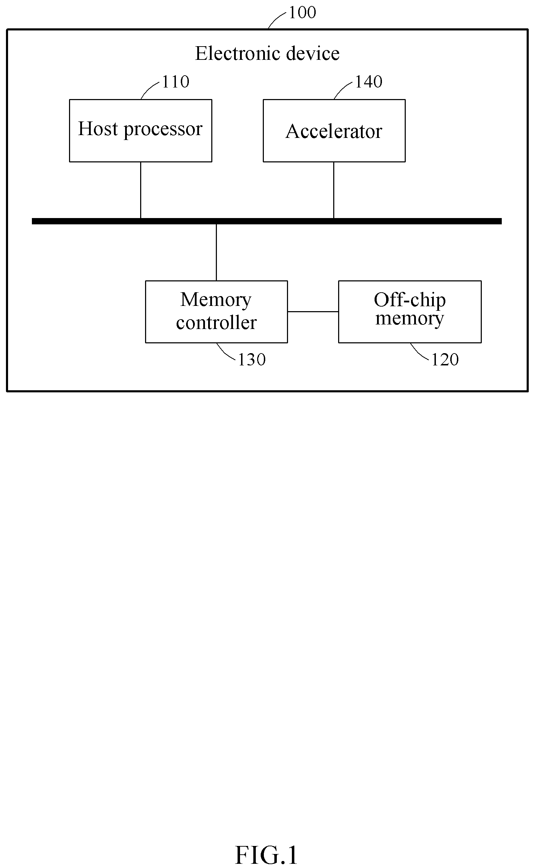

FIG. 1 illustrates an example of an electronic device.

Referring to FIG. 1, an electronic device 100 may include a host processor 110 (e.g., one or more processors), an off-chip memory 120, a memory controller 130, and an accelerator 140. The host processor 110, the off-chip memory 120, the memory controller 130, and the accelerator 140 may communicate with each other through a bus.

The host processor 110 may be a device that controls operations of components included in the electronic device 100, and may include, for example, a central processing unit (CPU). The host processor 110 receives a request to process a neural network in the accelerator 140, and generates an instruction executable by the accelerator 140 in response to the request. The request may be for data inference based on the neural network, and, in response to the generated instruction, the accelerator 140 executes the neural network to obtain a data inference result for speech recognition, machine translation, machine interpretation, object recognition, pattern recognition, computer vision, and/or the like. The host processor 110 may transmit inference target data and parameters of the neural network to the accelerator 140.

The off-chip memory 120 may be a memory disposed outside the accelerator 140, and may be, for example, a dynamic random-access memory (DRAM) utilized as a main memory of the electronic device 100. The off-chip memory 120 may be accessed through the memory controller 130. The off-chip memory 120 may store the parameters of the neural network to be executed by the accelerator 140, and be utilized when an on-chip memory in the accelerator 140 is insufficient to execute the neural network by the accelerator 140.

The off-chip memory 120 may have a larger memory capacity than the on-chip memory in the accelerator 140. However, when the neural network is being executed, a memory access cost for the accelerator 140 accessing the off-chip memory 120 may be greater than a memory access cost for the accelerator 140 accessing the internal on-chip memory. The memory access cost may be a power and/or time required to access the corresponding memory and read or write data.

The accelerator 140 may be an AI accelerator that infers input data by executing the neural network according to the instruction of the host processor 110, and may be a separate processor different from the host processor 110. For example, the accelerator 140 may be a neural processing unit (NPU) (or neural processor), a graphics processing unit (GPU), or a tensor processing unit (TPU).

The accelerator 140 may process tasks that may be more efficiently processed by a separate exclusive processor (that is, the accelerator 140), rather than by the general-purpose host processor 110, due to the characteristics of the operations according to the neural network. In this example, the on-chip memory and one or more processing elements (PEs) included in the accelerator 140 may be utilized by the accelerator 140 in executing the neural network. The on-chip memory may be a global buffer included in the accelerator 140 and may be distinguished from the off-chip memory 120 disposed outside the accelerator 140. For example, the on-chip memory may be a scratchpad memory, a static random-access memory (SRAM), or the like that is accessible through an address space.

The neural network may include a plurality of layers. The neural network may include an input layer, a plurality of hidden layers, and an output layer. Each of the layers may include a plurality of nodes, also called artificial neurons. While the nodes may be referred to as "artificial neurons," such reference is not intended to impart any relatedness with respect to how the neural network architecture computationally maps or thereby intuitively recognizes information and how a human's neurons operate. I.e., the term "artificial neurons" is merely a term of art referring to the hardware implemented nodes of the neural network. Each node may be a calculation unit having one or more inputs and an output, and the nodes may be connected to each other. A weight may be set for a connection between nodes, and the weight may be adjusted or changed. The weight may amplify, reduce, or maintain a relevant data value, thereby determining a degree of influence of the data value on a final result. Weighted inputs of nodes included in a previous layer may be input into each node included in the output layer. A process of inputting weighted data from a predetermined layer to the next layer may be referred to as propagation.

To improve the performance of the neural network, normalization may be applied to data transferred between layers. In other words, data distribution may be normalized through a series of operations such as obtaining an average and/or a variance of data transferred from one layer to a next layer and dividing, by the variance, a result of subtracting a value of each element of the corresponding data from the average value. The normalization applied to the neural network may include, for example, layer normalization and instance normalization. Layer normalization may be a technique for performing normalization in a channel direction regardless of the batch size, and may be applied to models in language field, such as speech recognition, machine translation, and machine interpretation. Instance normalization may be a technique for normalizing the entire image in unit of channels by performing normalization in the width and height directions, and may be applied to, for example, a generative adversarial network (GAN).

In addition, when an attention technique is applied to a neural network for image processing, global average pooling in which a pooling window is in the size equal to the size of the entire image may be performed, and neural networks to which global average pooling is applied may include, for example, a spatial pyramid pooling network (SPPNet) and a squeeze and excitation network (SENet).

As described above, operations for performing normalization by the neural network may include an operation for calculating the average and/or variance each time data is transferred between layers. For such operations, a typical electronic device may transfer the data to be normalized to a special operator such as a host processor outside an accelerator, and a result of calculation by the special operator may be received again by the accelerator, and accordingly such data movement of the typical electronic device may increase latency and power consumption. Accordingly, to improve the performance of the electronic device 100, the electronic device 100 of one or more embodiments may minimize data movements outside the accelerator 140 by performing, inside the accelerator 140, the operations to perform normalization by the neural network.

To implement operations that are not directly supported by the accelerator 140, square sum and/or square mean operations are replaced with convolution operations. Kernels used for the convolution operations may be determined based on the data to be normalized. Through this, the accelerator 140 may obtain output data identical to outputs that would be generated by directly performing operations specified by the normalization layer based on the convolution operations, even when the convolution operations do not match the operations specified by the normalization layer. In summary, the accelerator 140 may obtain output data equivalent to the outputs of the normalization layer, without transmitting the data to the special operator such as the host processor 110 even without correction of the hardware architecture.

Hereinafter, a detailed description will be provided with reference to the following drawings.

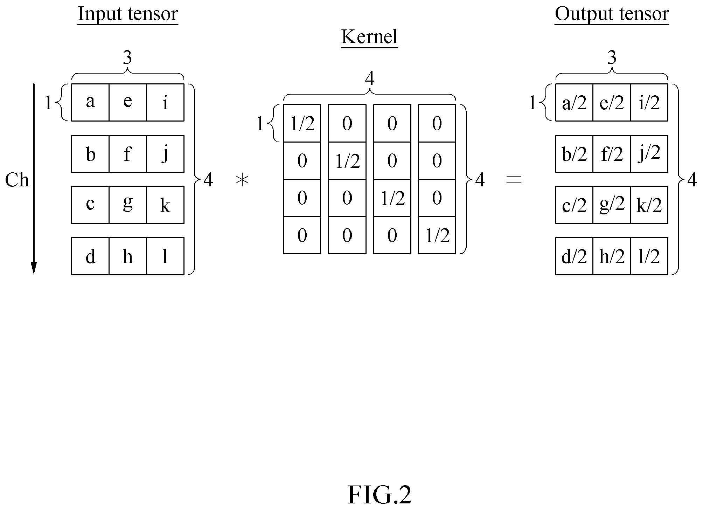

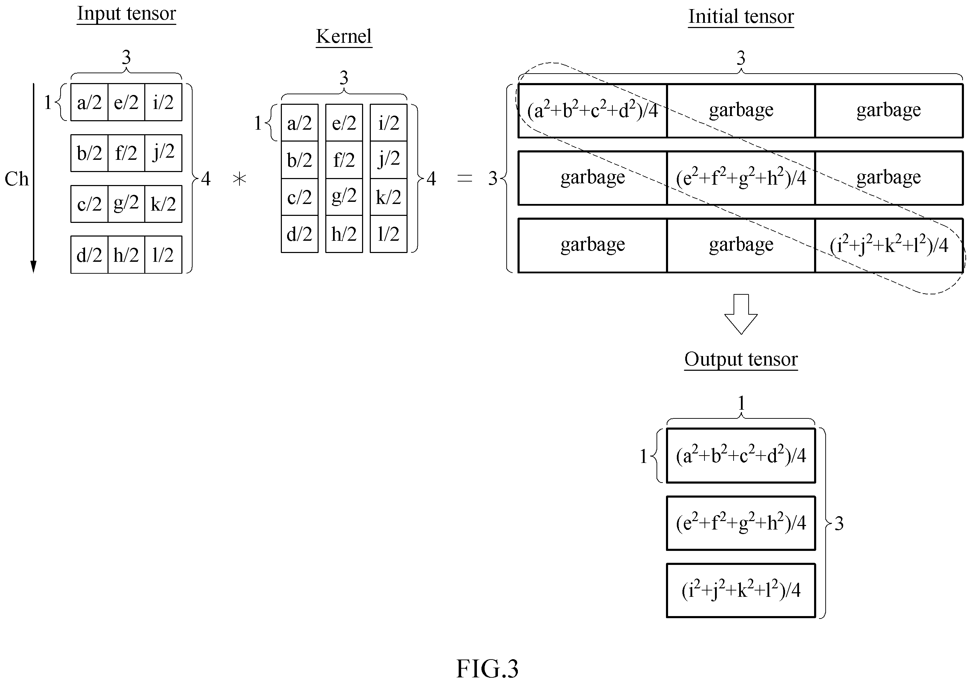

FIGS. 2 and 3 illustrate examples of processing a tensor with respect to a first normalization layer.

Referring to FIG. 2, a process of dividing a value of each element of an input tensor by a constant (e.g., a predetermined value) obtained based on the number of elements belonging to a normalization unit, to obtain an operation result of a square mean according to a first normalization layer is illustrated. The first normalization layer may be based on layer normalization, and convolution may be performed to attenuate in a channel axis direction. Such a convolution operation may be performed based on a convolution layer. Examples of the tensor shapes, the kernel shape, and the element values shown in FIG. 2 are provided for ease of description, and various shapes and values are applicable without limitation.

For data normalization, operations according to the first normalization layer may be performed, and a tensor in which a portion of such operations is already performed may correspond to the input tensor of FIG. 2. For example, the input tensor of FIG. 2 may be an average subtraction tensor in which a value of each of elements included in a tensor input into the first normalization layer is subtracted from an average value of the elements. According to the example of FIG. 2, the input tensor has a (1, 4, 3, 1) shape, and the value of each element may be represented by any one of a to I. Here, the tensor structure or shape is expressed as (batch, channel, width, height).

A kernel shown in FIG. 2 has a number (e.g., a total number) of input channels and a number of output channels determined based on the input tensor. The kernel may have the number of input channels and the number of output channels equal to the number of elements belonging to a normalization unit applied to the input tensor. For example, the kernel may have the number of input channels and the number of output channels equal to the number of channels of the input tensor. In the example of FIG. 2, the kernel has a (4, 4, 1, 1) shape, where the kernel shape is expressed as (input channel, output channel, width, height). Also, in the kernel, diagonal elements may have scaling values corresponding to an inverse of the square root of the number of elements (for example, the number of channels of the input tensor) belonging to the normalization unit applied to the input tensor, and the remaining elements may have scaling values of "0". In this specification, a scaling value may also be referred to as a weight value for ease of description.

Convolution between the input tensor and the kernel is performed in the channel axis direction. In FIG. 2, the channel axis direction may be indicated by Ch. For example, among the first element values a, b, c, and d in each channel of the input tensor and values 1/2, 0, 0, and 0 of a first column of the kernel, a may be multiplied by 1/2, and b, c, and d may be multiplied by "0". Based on the sum thereof, a value of a first element in the output tensor may be determined to be a/2. Likewise, convolution may be performed on the remaining elements as well. Each element in the output tensor may have a value obtained by multiplying a value of a corresponding element in the input tensor by an inverse of the square root of the number of channels of the input tensor. The output tensor has a (1, 4, 3, 1) shape, which is the same as the shape of the input tensor.

According to another example, in an accelerator including a shifter and/or a divider, an operation of dividing by the square root of the number of elements belonging to the normalization unit applied to the input tensor may be performed in the shifter and/or the divider, without the convolution operation described above.

Referring to FIG. 3, an example of a convolution operation for obtaining an operation result of a square mean according to the first normalization layer is illustrated. The tensor shapes, the kernel shape, and the element values shown in FIG. 3 are examples for ease of description, and various shapes and element values are applicable without limitation.

An input tensor in an example of FIG. 3 may be the output tensor obtained in the example of FIG. 2 and may have a (1, 4, 3, 1) shape.

A kernel shown in FIG. 3 has a number of input channels and a number of output channels determined based on the input tensor. The kernel may have the number of input channels determined based on the number of elements belonging to a normalization unit applied to the input tensor. For example, the kernel may have the number of input channels equal to the number of channels of the input tensor. Further, the kernel may have the number of output channels equal to the width length of the input tensor. In the example of FIG. 3, the kernel may have a (4, 3, 1, 1) shape.

Also, each element in the kernel may have a scaling value determined based on the input tensor. The scaling value of each element included in the kernel may include a runtime value corresponding to a target tensor (e.g., the input tensor). For example, the scaling value of each element included in the kernel may be equal to a value of a corresponding element in the target tensor.

Convolution between the input tensor and the kernel is performed in the channel axis direction. First, scaling values a/2, b/2, c/2, and d/2 in a first column included in the kernel may be convolved to the input tensor, whereby elements in a first channel of an initial tensor (e.g., a result tensor) may be determined. For example, the first element values a/2, b/2, c/2, and d/2 in each channel of the input tensor may be multiplied by corresponding scaling values a/2, b/2, c/2, and d/2 of the first column of the kernel, respectively, and based on the sum thereof, a value of a first element in a first channel of the initial tensor may be determined to be (a²+b²+c²+d²)/4. Through the convolution operation described above, the square sum of the first element values a/2, b/2, c/2, and d/2 in each channel of the input tensor may be obtained. In the initial tensor, a value of a second element in the first channel may be determined through a convolution operation between second element values e/2, f/2, g/2, and h/2 in each channel of the input tensor and corresponding scaling values a/2, b/2, c/2, and d/2 of the kernel. However, since the convolution operation is performed to obtain a square sum, the value of the second element in the first channel of the initial tensor may be discarded, which will be described later. Likewise, a value of a third element in the first channel of the initial tensor may be discarded as well.

Further, scaling values e/2, f/2, g/2, and h/2 in a second column included in the kernel may be convolved to the input tensor, whereby elements in a second channel of the initial tensor may be determined. For example, the second element values e/2, f/2, g/2, and h/2 in each channel of the input tensor may be multiplied by corresponding scaling values e/2, f/2, g/2, and h/2 of the second column of the kernel, respectively, and based on the sum thereof, a value of a second element in a second channel of the initial tensor may be determined to be (e²+f²+g²+h²)/4. Likewise, the remaining element values may be determined. Further, scaling values i/2, j/2, k/2, and I/2 in a third column included in the kernel may be convolved to the input tensor, whereby elements in a third channel of the initial tensor may be determined.

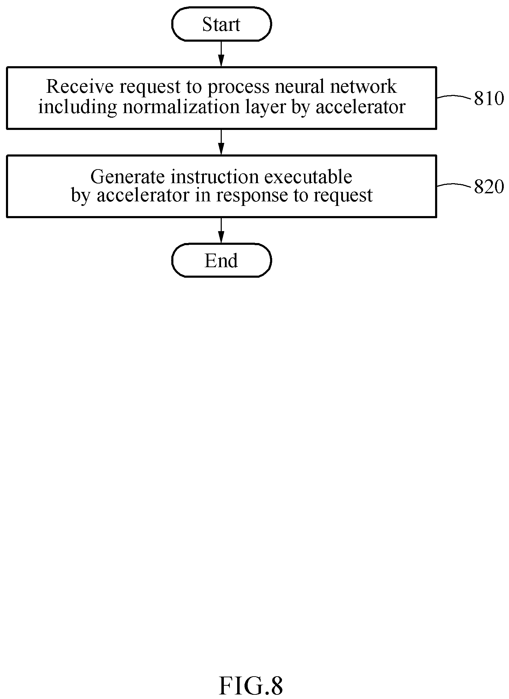

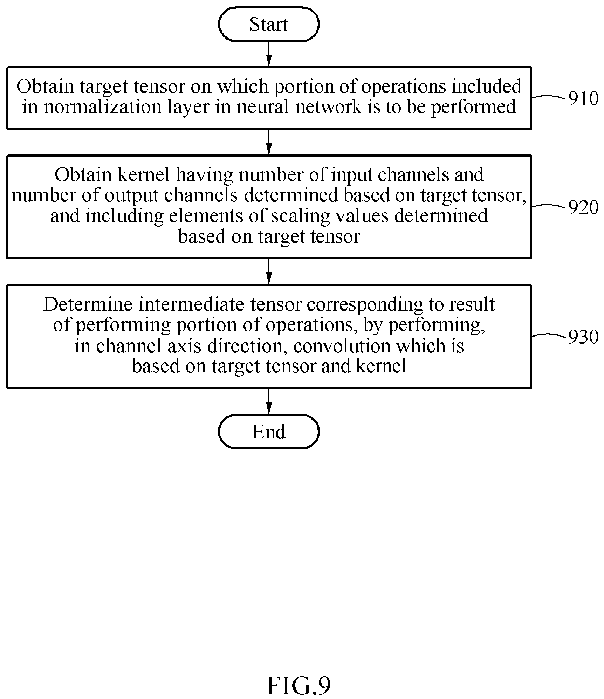

In the example of FIG. 3, the initial tensor may have a (1, 3, 3, 1) shape, and an output tensor may be determined by extracting diagonal elements from the initial tensor. No additional hardware is required to extract the diagonal elements from the initial tensor. The output tensor may have a (1, 3, 1, 1) shape. In an example, the input tensor, the kernel, and the output tensor of FIG. 3 may respectively correspond to a target tensor, a kernel, and an intermediate tensor of either of FIGS. 8 and 9 described further below.

The square sum of elements belonging to a normalization unit applied to the input tensor of FIG. 3 may be calculated through the convolution operation performed in FIG. 3. When the convolution operation of FIG. 2 and the convolution operation of FIG. 3 are performed in succession, the output tensor finally obtained in FIG. 3 may include the square mean of the elements belonging to the normalization unit applied to the input tensor of FIG. 2. Furthermore, as described above, when the input tensor of FIG. 2 is an average subtraction tensor, the output tensor finally obtained in FIG. 3 may include a variance of the elements belonging to the normalization unit. This variance may be used for normalization, which will be described in detail later.

As such, without a tensor being transmitted outside the accelerator, the variance of the tensor input into the normalization layer through two convolutional layers may be obtained by a multiplier-accumulator (MAC) included in the accelerator, thereby reducing a memory access cost. When the accelerator includes a shifter and/or a divider, the operation described in FIG. 2 may be performed even without a convolutional layer, and thus the variance may be calculated with only one convolutional layer.

According to another example, the operation described in FIG. 2 may be performed after the operation described in FIG. 3. In this example, each of the element values of the output tensor calculated in FIG. 3 may be divided by the number of elements belonging to the normalization unit. However, performing the operation described in FIG. 3 after the operation described in FIG. 2 as described above may be convenient in terms of quantization as limiting the input range to be small and thus, may be preferable depending on an embodiment.

While the height of the input tensor is "1" in the previous non-limiting example, when either the width or the height is not "1", the input tensor may be reshaped to make either the width or the height "1", then the operations described above may be performed, and the obtained output tensor may be reshaped again to the original input tensor shape.

In addition, while the batch of the input tensor is "1" in the previous descriptions, when the batch is not "1", the operations described above may be performed independently for each batch.

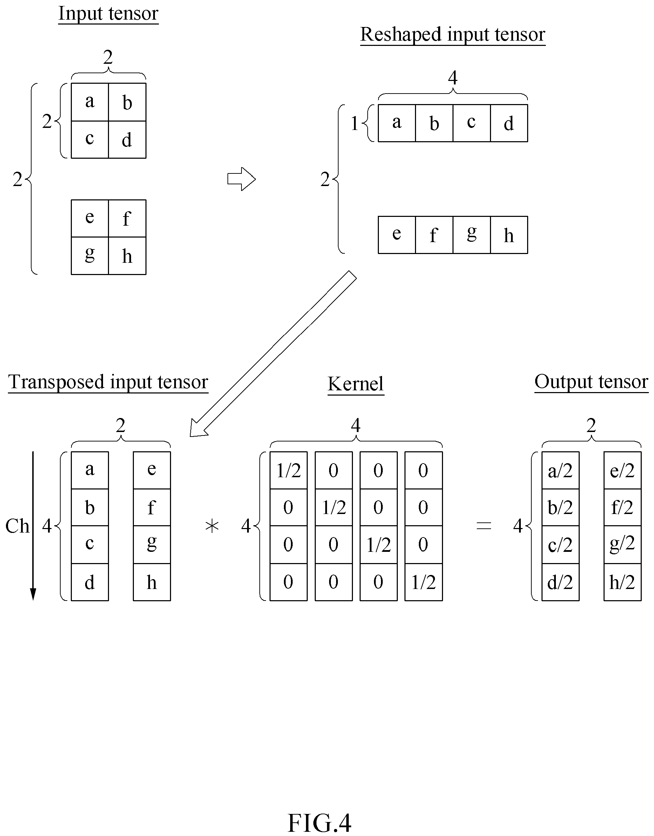

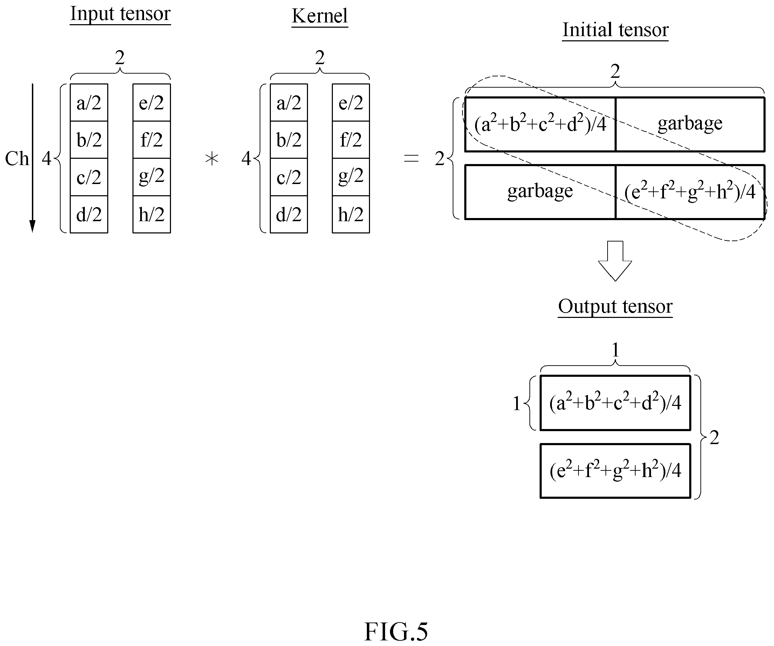

FIGS. 4 and 5 illustrate examples of processing a tensor with respect to a second normalization layer.

Referring to FIG. 4, a process of dividing a value of each element of an input tensor by a constant (e.g., a predetermined value) obtained based on the number of elements belonging to a normalization unit, to obtain an operation result of a square mean according to a second normalization layer is illustrated. The second normalization layer may be based on instance normalization, and convolution may be performed to attenuate in a channel axis direction after a tensor shape is transformed by reshaping and transposing to normalize an entire image in unit of channels. Such a convolution operation may be performed based on a convolution layer. The tensor shapes, the kernel shape, and the element values shown in FIG. 4 are examples for ease of description, and various shapes and values are applicable without limitation.

For data normalization, operations according to the second normalization layer should be performed, and a tensor in which a portion of such operations is already performed may correspond to the input tensor of FIG. 4. For example, the input tensor of FIG. 4 may be an average subtraction tensor in which a value of each of elements included in a tensor input into the second normalization layer is subtracted from an average value of the elements. According to the example of FIG. 4, the input tensor has a (1, 2, 2, 2) shape, and the value of each element may be represented by any one of a to h. Here, the tensor structure is expressed as (batch, channel, width, height).

In order to apply the convolution operation performed in the channel axis direction described above with reference to FIGS. 2 and 3 to the instance normalization according to the second normalization layer, the shape of the input tensor may be transformed. First, two-dimensional elements in each channel of the input tensor may be reshaped into one-dimensional elements. For example, elements a to d in a first channel of the input tensor may be arranged in a line, and elements e to h in a second channel may also be arranged in a line. The reshaped input tensor may be transposed. The transposed input tensor may have a (1, 4, 2, 1) shape and be convoluted with the kernel as described below.

A kernel shown in FIG. 4 may have a number of input channels and a number of output channels determined based on the input tensor. The kernel may have the number of input channels and the number of output channels equal to the number of elements belonging to a normalization unit being applied. The number of elements belonging to the normalization unit applied to instance normalization may be the number of elements included in the same channel in the input tensor. Further, the diagonal elements and the remaining elements in the kernel may have different scaling values. For example, diagonal elements of the kernel may include, as scaling values, an inverse of the square root of the number of elements in the normalization unit being applied. The remaining elements may include scaling values of "0".

Convolution between the input tensor and the kernel may be performed in the channel axis direction, and In FIG. 4, the channel axis direction may be indicated by Ch. The descriptions provided above (e.g., of the convolution between the input tensor and the kernel of FIG. 2) may apply to the convolution operation.

According to another example, if an accelerator includes a shifter and/or a divider, a convolution operation requiring a convolutional layer may be replaced with a division operation to be performed by the shifter and/or the divider. By utilizing the shifter and/or the divider, the number of convolutional layers for performing normalization may be reduced by "1".

Referring to FIG. 5, an example of a convolution operation for obtaining an operation result of a square mean according to the second normalization layer is illustrated. The tensor shapes, the kernel shape, and the element values shown in FIG. 5 are examples for ease of description, and various shapes and element values are applicable without limitation.

An input tensor in an example of FIG. 5 may be the output tensor obtained in the example of FIG. 4 and may have a (1, 4, 2, 1) shape.

A kernel shown in FIG. 5 may have the number of input channels and the number of output channels determined based on the input tensor. The kernel may have the number of input channels determined based on the number of elements belonging to a normalization unit applied to the input tensor. Elements included in the same channel for instance normalization according to the second normalization layer correspond to the normalization unit. As described in FIG. 4, since the tensor is transformed to have the number of channels equal to the number of elements included in the same channel through reshaping and transposing to transform the tensor shape, the kernel may have the number of input channels equal to the number of channels of the input tensor in the example of FIG. 5. Further, the kernel may have the number of output channels equal to the width length of the input tensor. In the example of FIG. 5, the kernel may have a (4, 2, 1, 1) shape.

Also, each element in the kernel may have a scaling value determined based on the input tensor. The scaling value of each element included in the kernel may include a runtime value corresponding to a target tensor. For example, the scaling value of each element included in the kernel may be equal to a value of a corresponding element in the target tensor.

Convolution between the input tensor and the kernel may be performed in the channel axis direction. The descriptions provided above (e.g., of the convolution between the input tensor and the kernel of FIG. 3) may apply to the convolution operation.

In the example of FIG. 5, an initial tensor (e.g., a result tensor) determined by the convolution operation may have a (1, 3, 3, 1) shape, and an output tensor may be determined by extracting diagonal elements from the initial tensor. No additional hardware is required to extract the diagonal elements from the initial tensor, and the output tensor may have a (1, 2, 1, 1) shape. In an example, the output tensor, the input tensor, and the kernel of FIG. 5 may respectively correspond to an intermediate tensor, a target tensor, and a kernel of either of FIGS. 8 and 9, described further below.

As such, when the convolution operation of FIG. 4 and the convolution operation of FIG. 5 are performed in succession, the output tensor finally obtained in FIG. 5 may include the square mean of the elements belonging to the normalization unit applied to the input tensor of FIG. 3. Furthermore, as described above, when the input tensor of FIG. 4 is an average subtraction tensor, the output tensor finally obtained in FIG. 5 may include a variance of the elements belonging to the normalization unit. The obtained variance may be used for normalization.

When the convolution operation of FIG. 5 is performed, the reshaping and transposing operations described in FIG. 4 may be performed before the convolution is performed. The square sum of the elements belonging to the normalization unit may be calculated through the convolution operation of FIG. 5.

According to another example, the operation described in FIG. 4 may be performed after the operation described in FIG. 5. In this example, reshaping and transposing the input tensor may be performed before the convolution operation of FIG. 5, and each of the element values of the output tensor calculated in FIG. 5 may be divided by the number of elements belonging to the normalization unit.

While the batch of the input tensor is "1" in the previous non-limiting examples, when the batch is not "1", the operations described above may be performed independently for each batch.

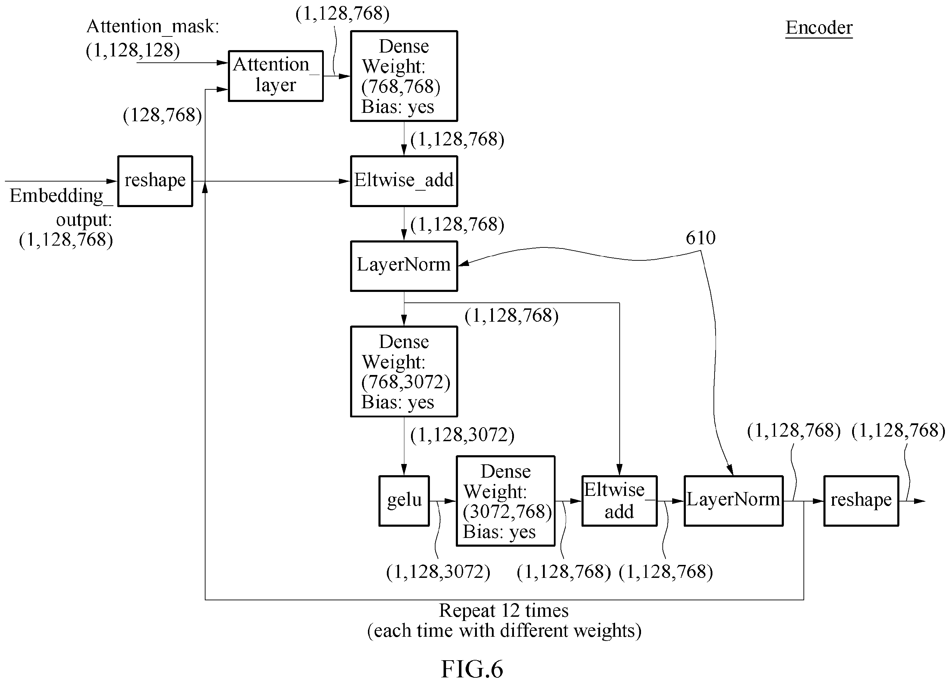

FIG. 6 illustrates an example of a neural network including a normalization layer.

Referring to FIG. 6, a bidirectional encoder representations from transformers (BERT) model is illustrated. Normalization layers 610 exist among a plurality of layers included in the BERT model, wherein when the corresponding model is repeated 12 times, the normalization layers 610 are executed a total of 12 times. Since the normalization layers 610 are disposed apart from each other, it is difficult for a typical BERT model to process the normalization layers 610 outside an accelerator at one time, and the cost (e.g., memory access cost) for data movement may be great as the normalization layers 610 are processed outside the accelerator each time in the typical BERT model. However, when such typical normalization layers 610 are replaced with the convolution according to one or more embodiments described above with reference to FIGS. 1-5, such data movement outside the accelerator to process the normalization layers 610 is prevented, and thus such cost may be effectively prevented.

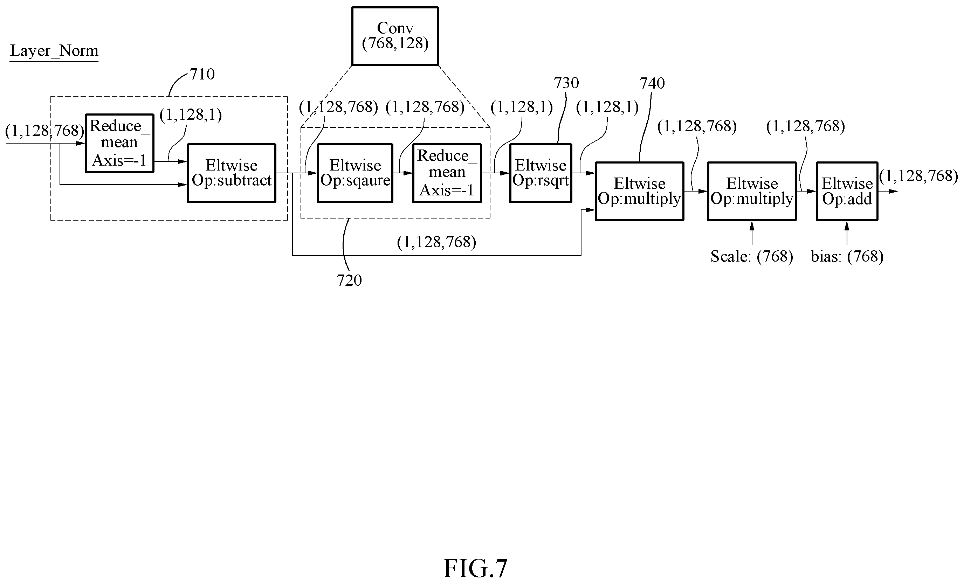

FIG. 7 illustrates an example of a normalization layer.

Referring to FIG. 7, an internal structure of a normalization layer is illustrated. The normalization layer shown in FIG. 7 may be a layer for performing layer normalization included in the BERT model of FIG. 6. An average subtraction tensor may be obtained from an input tensor at a first part 710 of the normalization layer, and a variance tensor may be obtained at a second part 720. However, the second part 720 may be replaced with one or two convolutional layers of one or more embodiments as described above with reference to FIGS. 1-5. An inverse of the square root of the variance may be obtained at a third part 730 and then multiplied by the average subtraction tensor at a fourth part 740. In doing so, normalization can be performed by the neural network.

FIGS. 8 and 9 illustrate examples of tensor processing methods.

Referring to FIG. 8, a tensor processing method performed by a host processor is illustrated. In operation 810, the host processor may receive a request to process a neural network including a normalization layer by an accelerator. In operation 820, the host processor may generate an instruction executable by the accelerator in response to the request. When the instruction is executed by the accelerator, the accelerator may determine an intermediate tensor corresponding to a result of performing a portion of operations included in the normalization layer, by performing, in a channel axis direction, a convolution which is based on a target tensor and a kernel. In an example, the intermediate tensor, the target tensor, and the kernel of FIG. 8 may respectively correspond to the output tensor, the input tensor, and the kernel of either one of FIGS. 3 and 5 described above.

Referring to FIG. 9, a tensor processing method performed by an accelerator is illustrated. In operation 910, the accelerator may obtain (e.g., determine) a target tensor on which a portion of operations included in a normalization layer in a neural network is to be performed. In operation 920, the accelerator may obtain a kernel having the number of input channels and the number of output channels determined based on the target tensor, and including elements of scaling values determined based on the target tensor. In operation 930, the accelerator may determine an intermediate tensor corresponding to a result of performing the portion of operations by performing, in a channel axis direction, a convolution which is based on the target tensor and the kernel. In an example, the input tensor, the kernel, and the output tensor of FIG. 5 may respectively correspond to a target tensor, a kernel, and an intermediate tensor of either of FIGS. 8 and 9 described further below.

The tensor processing method may be applied for training or inference at an algorithm end, a compiler end, hardware of a network using multi-head attention such as automatic speech recognition (ASR), or a transformer. In addition, even when a low-precision quantization scheme is applied to the tensor processing method, the performance gain may be secured while the system accuracy may remain the same.

The descriptions provided above with reference to FIGS. 1 to 7 may apply to the operations shown in FIGS. 8 and 9.

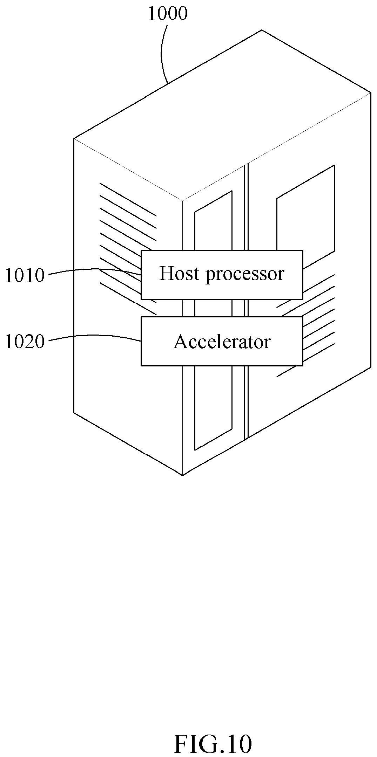

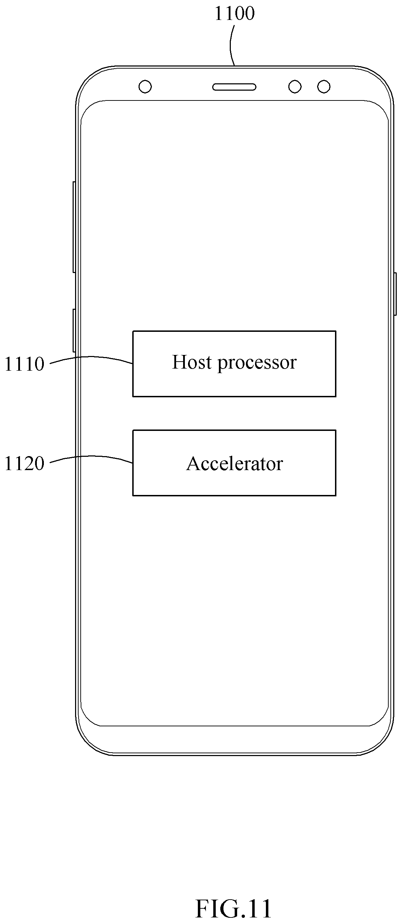

FIGS. 10 and 11 illustrate examples of electronic devices.

Referring to FIG. 10, an electronic device (e.g., the electronic device 100 of FIG. 1) may be implemented as a server 1000.

The server 1000 may be a separate device different from a user terminal controlled by a user, and may communicate with the user terminal through a wired and/or wireless network. Data to be inferred using a neural network may be collected from the user terminal and transmitted to the server 1000 through the network, and the server 1000 may process a normalization layer included in the neural network by an accelerator 1020 according to the tensor processing methods described above with reference to FIGS. 1-5. In this example, a tensor may not be transmitted to a host processor 1010 outside the accelerator 1020 for performing an operation according to the normalization layer. Then, the server 1000 may obtain an inference result from the neural network and return the inference result to the user terminal. For example, the user terminal may include various computing devices such as a smart phone, a tablet, a laptop and a personal computer, various wearable devices such as a smart watch and smart glasses, various home appliances such as a smart speaker, a smart TV and a smart refrigerator, a smart car, a smart kiosk, and an Internet of things (loT) device.

The user terminal may simply provide the user with the inference result received from the server 1000, or perform a subsequent operation based on the inference result.

Referring to FIG. 11, an electronic device (e.g., the electronic device 100 of FIG. 1) may be implemented as a user terminal 1100. In FIG. 11, the user terminal 1100 is illustrated as a smart phone for ease of description. However, any device controlled by the user may be applicable thereto without limitation. The user terminal 1100 may obtain data to be inferred using a neural network directly from the user, and process a normalization layer included in the neural network by an accelerator 1120 according to the tensor processing method described above. In this example, a tensor may not be transmitted to a host processor 1110 outside the accelerator 1120 for performing an operation according to the normalization layer. In addition, the user terminal 1100 may obtain an inference result from the neural network and simply provide the user with the result or perform a subsequent operation based on the inference result.

The electronic devices, host processors, off-chip memories, memory controllers, accelerators, servers, user terminals, electronic device 100, host processor 110, off-chip memory 120, memory controller 130, accelerator 140, server 1000, host processor 1010, accelerator 1020, user terminal 1100, host processor 1110, accelerator 1120, and other apparatuses, devices, units, modules, and components described herein with respect to FIGS. 1-11 are implemented by or representative of hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-11 that perform the operations described in this application are performed by computing hardware, for example, by one or more processors or computers, implemented as described above executing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions used herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD-Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

## Claims

1. A processor-implemented tensor processing method, comprising:
receiving a request to process a neural network including a normalization layer by an accelerator (140); and
generating an instruction executable by the accelerator (140) in response to the request,
wherein, by executing the instruction, the accelerator (140) is configured to
determine a target tensor on which a portion of operations included in the normalization layer in the neural network is to be performed, wherein the portion of operations refers to operations to perform normalization by the neural network that are not directly supported by the accelerator (140); wherein the portion of operations is a sum of squares operation; and wherein the target tensor is determined based on:
an average subtraction tensor comprising values determined by subtracting a value of each of elements included in an input tensor of the normalization layer from an average value of the elements; and
a constant value being equal to a square root of a number of elements of a normalization unit applied to the target tensor;
determine a kernel having a number of input channels and a number of output channels determined based on the target tensor and including elements of scaling values determined based on the target tensor; and
determine an intermediate tensor corresponding to a result of performing the portion of operations included in the normalization layer, by performing, in a channel axis direction, a convolution based on the target tensor and the kernel.

2. The method of claim 1, wherein the accelerator (140) is configured to determine the intermediate tensor by extracting diagonal elements from a result tensor determined by the convolution based on the target tensor and the kernel.

3. The method of claim 1 or 2, wherein the number of input channels of the kernel is determined based on a number of elements of a normalization unit applied to the target tensor,
preferably, wherein the number of elements of the normalization unit applied to the target tensor is equal to a number of channels of an input tensor, and the number of input channels of the kernel is equal to the number of channels of the input tensor.

4. The method of one of claims 1 to 3, wherein the number of output channels of the kernel is determined based on a width length of the target tensor; and/or
wherein a scaling value of each of the elements included in the kernel includes a runtime value corresponding to the target tensor; and/or
wherein a scaling value of each of the elements included in the kernel is equal to a value of a corresponding element in the target tensor.

5. The method of claim 1, wherein the target tensor is determined by performing, in a channel axis direction, a convolution based on:
the average subtraction tensor; and
a second kernel having a number of input channels and a number of output channels determined based on the average subtraction tensor and including diagonal elements of scaling values determined based on the constant value.

6. The method of claim 5, wherein the number of input channels and the number of output channels of the second kernel are equal to the number of elements of the normalization unit, and
the diagonal elements in the second kernel have different scaling values from those of the remaining elements.

7. The method of claim 5, wherein the scaling values of the second kernel are equal to an inverse of the square root.

8. The method of one of claims 1 to 7, wherein the normalization layer is configured to perform normalization using either one or both of an average and a variance determined based on values of one or more elements included in the target tensor.

9. The method of one of claims 1 to 8, wherein the convolution is performed between the kernel and an input tensor transformed such that elements included in the same channel are arranged in a line, and
the intermediate tensor is determined by transforming elements determined as a result of the convolution to the same form as the input tensor.

10. The method of one of claims 1 to 9, wherein the convolution is performed in the accelerator (140) such that the target tensor is not transmitted outside the accelerator (140) to perform an operation according to the normalization layer; and/or
wherein the accelerator (140) is included in either one of:
a user terminal into which data to be inferred using the neural network is input; and
a server that receives the data to be inferred from the user terminal.

11. A non-transitory computer-readable storage medium storing instructions that, when executed by a processor, configure the processor to perform the method of one of claims 1 to 10.

12. An accelerator (140), comprising:
one or more processors configured to:
receive, from the host processor (110), an instruction executable by the accelerator (140) in response to a request being received by the host processor to process a neural network including a normalization layer;
determine a target tensor on which a portion of operations included in a normalization layer in a neural network is to be performed, wherein the portion of operations refers to operations to perform normalization by the neural network that are not directly supported by the accelerator; wherein the portion of operations is a sum of squares operation; and wherein the target tensor is determined based on:
an average subtraction tensor comprising values determined by subtracting a value of each of elements included in an input tensor of the normalization layer from an average value of the elements; and
a constant value being equal to a square root of a number of elements of a normalization unit applied to the target tensor;
determine a kernel having a number of input channels and a number of output channels determined based on the target tensor and including elements of scaling values determined based on the target tensor; and
determine an intermediate tensor corresponding to a result of performing the portion of operations by performing, in a channel axis direction, a convolution based on the target tensor and the kernel.

13. The accelerator (140) of claim 12, wherein the one or more processors are configured to determine the intermediate tensor by extracting diagonal elements from a result tensor determined by the convolution based on the target tensor and the kernel; and/or
wherein the number of input channels determined of the kernel is based on a number of elements of a normalization unit applied to the target tensor; and/or
wherein a scaling value of each of the elements included in the kernel includes a runtime value corresponding to the target tensor; and/or
wherein a scaling value of each of the elements included in the kernel is equal to a value of a corresponding element in the target tensor.

14. An electronic device (100), comprising:
the accelerator (140) according to claim 12; and
the host processor (110) configured to generate the instruction executable by the accelerator (140) in response to the request to process a neural network including a normalization layer by the accelerator (140).

## Patentansprüche

1. Durch einen Prozessor implementiertes Tensorverarbeitungsverfahren, das umfasst:
Empfangen einer Anforderung zur Verarbeitung eines eine Normalisierungsschicht enthaltenden neuronalen Netzwerks durch einen Beschleuniger (140); und
Erzeugen einer von dem Beschleuniger (140) ausführbaren Anweisung als Reaktion auf die Anforderung,
wobei der Beschleuniger (140) durch Ausführen der Anweisung ausgebildet ist zum
Bestimmen eines Zieltensors, auf dem ein Teil der in der Normalisierungsschicht in dem neuronalen Netzwerk enthaltenen Operationen durchzuführen ist, wobei sich der Teil der Operationen auf Operationen zur Durchführung der Normalisierung durch das neuronale Netzwerk bezieht, die von dem Beschleuniger (140) nicht direkt unterstützt werden; wobei der Teil der Operationen eine Quadratsummenoperation ist; und wobei der Zieltensor der Grundlage bestimmt wird von:
einem durchschnittlichen Subtraktionstensor, der Werte umfasst, die durch Subtrahieren eines Werts jedes der in einem Eingangstensor der Normalisierungsschicht enthaltenen Elemente von einem Durchschnittswert der Elemente bestimmt werden; und
einem konstanten Wert, der gleich der Quadratwurzel einer Anzahl von Elementen einer Normalisierungseinheit ist, die auf den Zieltensor angewendet wird;
Bestimmen eines Kernels mit einer Anzahl von Eingangskanälen und einer Anzahl von Ausgangskanälen, die auf der Grundlage des Zieltensors bestimmt werden und Elemente von Skalierungswerten enthalten, die auf der Grundlage des Zieltensors bestimmt werden; und
Bestimmen eines Zwischentensors, der einem Ergebnis der Durchführung des Teils der Operationen entspricht, die in der Normalisierungsschicht enthalten sind, indem in einer Kanalachsenrichtung eine Faltung auf der Grundlage des Zieltensors und des Kernels durchgeführt wird.

2. Verfahren nach Anspruch 1, wobei der Beschleuniger (140) ausgebildet ist, den Zwischentensor zu bestimmen durch Extrahieren von Diagonalelementen aus einem Ergebnistensor, der durch die Faltung auf der Grundlage des Zieltensors und des Kernels bestimmt wird.

3. Verfahren nach Anspruch 1 oder 2, wobei die Anzahl der Eingangskanäle des Kernels auf der Grundlage einer Anzahl von Elementen einer auf den Zieltensor angewendeten Normalisierungseinheit bestimmt wird,
vorzugsweise wobei die Anzahl der Elemente der auf den Zieltensor angewendeten Normalisierungseinheit gleich einer Anzahl von Kanälen eines Eingangstensors ist, und die Anzahl der Eingangskanäle des Kernels gleich der Anzahl von Kanälen des Eingangstensors ist.

4. Verfahren nach einem der Ansprüche 1 bis 3, wobei die Anzahl der Ausgangskanäle des Kernels auf der Grundlage einer Breitenlänge des Zieltensors bestimmt wird; und/oder
wobei ein Skalierungswert jedes der im Kernel enthaltenen Elemente einen Laufzeitwert enthält, der dem Zieltensor entspricht; und/oder
wobei ein Skalierungswert jedes der im Kernel enthaltenen Elemente gleich einem Wert eines entsprechenden Elements in dem Zieltensor ist.

5. Verfahren nach Anspruch 1, wobei der Zieltensor bestimmt wird, indem in einer Kanalachsenrichtung eine Faltung durchgeführt wird, basierend auf:
dem durchschnittlichen Subtraktionstensor; und
einem zweiten Kernel mit einer Anzahl von Eingangskanälen und einer Anzahl von Ausgangskanälen, die basierend auf dem durchschnittlichen Subtraktionstensor bestimmt werden, und mit Diagonalelemente von Skalierungswerten, die basierend auf dem konstanten Wert bestimmt werden.

6. Verfahren nach Anspruch 5, wobei die Anzahl der Eingangskanäle und die Anzahl der Ausgangskanäle des zweiten Kernels gleich der Anzahl der Elemente der Normalisierungseinheit sind; und
die Diagonalelemente in dem zweiten Kernel andere Skalierungswerte als die übrigen Elemente haben.

7. Verfahren nach Anspruch 5, wobei die Skalierungswerte des zweiten Kernels gleich dem Kehrwert der Quadratwurzel sind.

8. Verfahren nach einem der Ansprüche 1 bis 7, wobei die Normalisierungsschicht konfiguriert ist, eine Normalisierung zu erhalten unter Verwendung eines Durchschnittswerts und/oder einer Varianz, die auf der Grundlage von Werten eines oder mehrerer Elemente bestimmt werden, die in dem Zieltensor enthalten sind.

9. Verfahren nach einem der Ansprüche 1 bis 8, wobei die Faltung zwischen dem Kernel und einem Eingangstensor durchgeführt wird, der so transformiert wird, dass Elemente, die in demselben Kanal enthalten sind, in einer Linie angeordnet sind, und
der Zwischentensor bestimmt wird durch Transformieren von Elementen, die als Ergebnis der Faltung bestimmt werden, in dieselbe Form wie der Eingangstensor.

10. Verfahren nach einem der Ansprüche 1 bis 9, wobei die Faltung in dem Beschleuniger (140) derart durchgeführt wird, dass der Zieltensor nicht außerhalb des Beschleunigers (140) übertragen wird, um eine Operation gemäß der Normalisierungsschicht durchzuführen; und/oder
wobei der Beschleuniger (140) enthalten ist in:
einem Benutzerterminal, in das Daten eingegeben werden, die unter Verwendung des neuronalen Netzwerks abgeleitet werden sollen; und/oder
einem Server, der die vom Benutzerterminal abgeleiteten Daten empfängt.

11. Nicht-flüchtiges, computerlesbares Speichermedium, das Anweisungen speichert, die, wenn sie von einem Prozessor ausgeführt werden, den Prozessor so konfigurieren, dass er das Verfahren nach einem der Ansprüche 1 bis 10 ausführt.

12. Beschleuniger (140), der aufweist:
einen oder mehrere Prozessoren, die konfiguriert sind zum:
Empfangen, von dem Host-Prozessor (110), einer Anweisung, die von dem Beschleuniger (140) als Reaktion auf eine von dem Host-Prozessor empfangene Anforderung zur Verarbeitung eines eine Normalisierungsschicht enthaltenden neuronalen Netzwerks ausführbar ist;
Bestimmen eines Zieltensors, auf dem ein Teil der in einer Normalisierungsschicht in einem neuronalen Netzwerk enthaltenen Operationen auszuführen ist, wobei sich der Teil der Operationen auf Operationen zur Durchführung der Normalisierung durch das neuronale Netzwerk bezieht, die nicht direkt von dem Beschleuniger unterstützt werden; wobei der Teil der Operationen eine Quadratsummenoperation ist; und wobei der Zieltensor auf der Grundlage bestimmt wird von:
einem durchschnittlichen Subtraktionstensor, der Werte umfasst, die durch Subtrahieren eines Werts jedes der in einem Eingangstensor der Normalisierungsschicht enthaltenen Elemente von einem Durchschnittswert der Elemente bestimmt werden; und
einem konstanten Wert, der gleich der Quadratwurzel einer Anzahl von Elementen einer Normalisierungseinheit ist, die auf den Zieltensor angewendet wird;
Bestimmen eines Kernels mit einer Anzahl von Eingangskanälen und einer Anzahl von Ausgangskanälen, die auf der Grundlage des Zieltensors bestimmt werden, und mit Elementen von Skalierungswerten, die auf der Grundlage des Zieltensors bestimmt werden; und
Bestimmen eines Zwischentensors, der einem Ergebnis der Durchführung des Teils der Operationen entspricht, indem in einer Kanalachsenrichtung eine Faltung auf der Grundlage des Zieltensors und des Kernels durchgeführt wird.

13. Beschleuniger (140) nach Anspruch 12, wobei der eine oder die mehreren Prozessoren konfiguriert sind, den Zwischentensor zu bestimmen durc h Extrahieren von Diagonalelementen aus einem Ergebnistensor, der durch die Faltung auf der Grundlage des Zieltensors und des Kernels bestimmt wird; und/oder
wobei die Anzahl der bestimmten Eingangskanäle des Kernels auf einer Anzahl von Elementen einer Normalisierungseinheit basiert, die auf den Zieltensor angewendet wird; und/oder
wobei ein Skalierungswert jedes der in dem Kernel enthaltenen Elemente einen Laufzeitwert enthält, der dem Zieltensor entspricht; und/oder
wobei ein Skalierungswert jedes der in dem Kernel enthaltenen Elemente gleich einem Wert eines entsprechenden Elements in dem Zieltensor ist.

14. Elektronische Vorrichtung (100), mit:
dem Beschleuniger (140) gemäß Anspruch 12; und
dem Hostprozessor (110), der konfiguriert ist, die von dem Beschleuniger (140) ausführbare Anweisung zu erzeugen als Reaktion auf die Anforderung zur Verarbeitung eines eine Normalisierungsschicht enthaltenden neuronalen Netzwerks durch den Beschleuniger (140).

## Revendications

1. Procédé de traitement tenseur mis en œuvre par un processeur, comprenant les opérations suivantes:
recevoir une demande de traitement d'un réseau neuronal comprenant une couche de normalisation par un accélérateur (140); et
générer une instruction exécutable par l'accélérateur (140) en réponse à la demande,
dans lequel, en exécutant l'instruction, l'accélérateur (140) est configuré pour
déterminer un tenseur cible sur lequel une partie des opérations incluses dans la couche de normalisation dans le réseau neuronal doit être effectuée, dans lequel la partie des opérations fait référence à des opérations visant à effectuer une normalisation par le réseau neuronal qui ne sont pas directement prises en charge par l'accélérateur (140); dans lequel la partie des opérations est une opération de somme des carrés; et dans lequel le tenseur cible est déterminé sur la base:
d'un tenseur de soustraction moyenne comprenant des valeurs déterminées en soustrayant une valeur de chacun des éléments inclus dans un tenseur d'entrée de la couche de normalisation d'une valeur moyenne des éléments; et
d'une valeur constante égale à la racine carrée d'un nombre d'éléments d'une unité de normalisation appliquée au tenseur cible;
déterminer un noyau comprenant un nombre de canaux d'entrée et un nombre de canaux de sortie déterminés sur la base du tenseur cible et comprenant des éléments de valeurs d'échelle déterminés sur la base du tenseur cible; et
déterminer un tenseur intermédiaire correspondant à un résultat de l'exécution de la partie des opérations incluses dans la couche de normalisation, en effectuant, dans une direction d'axe de canal, une convolution sur la base du tenseur cible et du noyau.

2. Procédé selon la revendication 1, dans lequel l'accélérateur (140) est configuré pour déterminer le tenseur intermédiaire en extrayant des éléments diagonaux d'un tenseur de résultat déterminé par la convolution sur la base du tenseur cible et du noyau.

3. Procédé selon les revendications 1 ou 2, dans lequel le nombre de canaux d'entrée du noyau est déterminé sur la base d'un nombre d'éléments d'une unité de normalisation appliquée au tenseur cible,
de préférence, dans lequel le nombre d'éléments de l'unité de normalisation appliquée au tenseur cible est égal à un nombre de canaux d'un tenseur d'entrée, et le nombre de canaux d'entrée du noyau est égal au nombre de canaux du tenseur d'entrée.

4. Procédé selon l'une des revendications 1 à 3, dans lequel le nombre de canaux de sortie du noyau est déterminé sur la base d'une longueur de largeur du tenseur cible; et/ou
dans lequel une valeur d'échelle de chacun des éléments inclus dans le noyau comprend une valeur d'exécution correspondant au tenseur cible; et/ou
dans lequel une valeur d'échelle de chacun des éléments inclus dans le noyau est égale à une valeur d'un élément correspondant dans le tenseur cible.

5. Procédé selon la revendication 1, dans lequel le tenseur cible est déterminé en effectuant, dans une direction d'axe de canal, une convolution sur la base:
le tenseur de soustraction moyenne; et
un second noyau comportant un nombre de canaux d'entrée et un nombre de canaux de sortie déterminés sur la base du tenseur de soustraction moyenne et comprenant des éléments diagonaux de valeurs d'échelle déterminées sur la base de la valeur constante.

6. Procédé selon la revendication 5, dans lequel le nombre de canaux d'entrée et le nombre de canaux de sortie du second noyau sont égaux au nombre d'éléments de l'unité de normalisation, et
les éléments diagonaux du second noyau ont des valeurs d'échelle différentes de celles des éléments restants.

7. Procédé selon la revendication 5, dans lequel les valeurs d'échelle du second noyau sont égales à l'inverse de la racine carrée.

8. Procédé selon l'une des revendications 1 à 7, dans lequel la couche de normalisation est configurée pour effectuer une normalisation en utilisant soit une moyenne, soit une variance, soit les deux, déterminées sur la base des valeurs d'un ou plusieurs éléments inclus dans le tenseur cible.

9. Procédé selon l'une des revendications 1 à 8, dans lequel la convolution est effectuée entre le noyau et un tenseur d'entrée transformé de telle sorte que les éléments inclus dans le même canal soient disposés en ligne, et
le tenseur intermédiaire est déterminé en transformant les éléments déterminés à la suite de la convolution sous la même forme que le tenseur d'entrée.

10. Procédé selon l'une des revendications 1 à 9, dans lequel la convolution est effectuée dans l'accélérateur (140) de telle sorte que le tenseur cible ne soit pas transmis à l'extérieur de l'accélérateur (140) pour effectuer une opération selon la couche de normalisation; et/ou
dans lequel l'accélérateur (140) est inclus dans l'un ou l'autre des éléments suivants:
un terminal utilisateur dans lequel sont entrées les données à déduire à l'aide du réseau neuronal; et
un serveur qui reçoit les données à déduire du terminal utilisateur.

11. Support de stockage non transitoire lisible par ordinateur stockant des instructions qui, lorsqu'elles sont exécutées par un processeur, configurent le processeur pour exécuter le procédé selon l'une des revendications 1 à 10.

12. Accélérateur (140), comprenant:
un ou plusieurs processeurs configurés pour:
recevoir, depuis le processeur hôte (110), une instruction exécutable par l'accélérateur (140) en réponse à une demande reçue par le processeur hôte pour traiter un réseau neuronal comprenant une couche de normalisation;
déterminer un tenseur cible sur lequel une partie des opérations incluses dans une couche de normalisation dans un réseau neuronal doit être effectuée, dans lequel la partie des opérations fait référence à des opérations visant à effectuer une normalisation par le réseau neuronal qui ne sont pas directement prises en charge par l'accélérateur;
dans lequel la partie des opérations est une opération de somme des carrés; et
dans lequel le tenseur cible est un tenseur de soustraction moyen déterminé sur la base:
d'un tenseur de soustraction moyenne comprenant des valeurs déterminées en soustrayant une valeur de chacun des éléments inclus dans un tenseur d'entrée de la couche de normalisation d'une valeur moyenne des éléments; et
d'une valeur constante égale à la racine carrée d'un nombre d'éléments d'une unité de normalisation appliquée au tenseur cible;
déterminer un noyau ayant un nombre de canaux d'entrée et un nombre de canaux de sortie déterminés sur la base du tenseur cible et comprenant des éléments de valeurs d'échelle déterminés sur la base du tenseur cible; et
déterminer un tenseur intermédiaire correspondant à un résultat de l'exécution de la partie des opérations en effectuant, dans une direction d'axe de canal, une convolution sur la base du tenseur cible et du noyau.

13. Accélérateur (140) selon la revendication 12, dans lequel le ou les processeurs sont configurés pour déterminer le tenseur intermédiaire en extrayant des éléments diagonaux d'un tenseur de résultat déterminé par la convolution sur la base du tenseur cible et du noyau; et/ou
dans lequel le nombre de canaux d'entrée déterminé du noyau est fondé sur un nombre d'éléments d'une unité de normalisation appliquée au tenseur cible; et/ou
dans lequel une valeur d'échelle de chacun des éléments inclus dans le noyau comprend une valeur d'exécution correspondant au tenseur cible; et/ou
dans lequel une valeur d'échelle de chacun des éléments inclus dans le noyau est égale à une valeur d'un élément correspondant dans le tenseur cible.

14. Dispositif électronique (100), comprenant:
l'accélérateur (140) selon la revendication 12; et
le processeur hôte (110) configuré pour générer l'instruction exécutable par l'accélérateur (140) en réponse à la demande de traitement d'un réseau neuronal comprenant une couche de normalisation par l'accélérateur (140).
